# EUROPEAN PATENT SPECIFICATION

(11) **EP 2 716 904 B1**
(45) Date of publication and mention of the grant of the patent: **29.08.2018**
(21) Application number: 12187161.0
(22) Date of filing: 04.10.2012
(51) Int. Cl.: F03D 1/06, B29C 70/84, B29L 31/08

(54) **method of manufacturing a composite spar cap for a rotor blade of a wind turbine**
Verfahren zur Herstellung eines Verbundholmgurts für eine Windturbinenlaufschaufel
procédé de fabrication d'un capuchon de longeron composite pour pale de rotor d'éolienne

(43) Date of publication of application: 09.04.2014
(73) Proprietor: Areva Blades GmbH, 21683 Stade (DE)
(72) Inventor: Koch, Fred, 18057 Rostock (DE); Bäcker, Jörg, 24782 Büdelsdorf (DE); Wagner, Raimund, 22391 Hamburg (DE)
(74) Representative: Prinz & Partner mbB

(56) References cited:
- WO-A1-2011/113812
- DE-A1-102008 055 537

## Description

### FIELD OF THE INVENTION

The invention relates to a method of manufacturing a spar cap for a rotor blade.

### BACKGROUND

As generally known in the art, wind turbines, also referred to as wind driven power plants or wind power plants have a rotor that carries rotor blades. Each blade is mounted to the rotor at the wing root and spans gradually towards to the free wing tip. The distance between the wing root and the wing tip is referred to as the span of the rotor blade. For modern wind turbines, the span can measure about 50 m which means that the rotor blades are subject to considerable forces.

The rotor blade has a leading edge which is the edge of the rotor blade that first contacts the moving air. Opposite to the leading edge is the trailing edge where the air flow that has been separated by the leading edge rejoins after passage over the suction surface and the pressure surface of the blade. The aerodynamic properties of the rotor blade are mainly defined by the airfoil or wing-profile which is the shape of the suction surface and the pressure surface of the rotor blade, if considered in a cross section perpendicular to the span.

Rotor blades are often fabricated by building two or more skin shell portions, for example, from layers of woven fabric and synthetic resin. Spar caps are then placed in the shell portions. Typically, there is at least one upper spar cap, which is adjacent to the suction surface, and at least one lower spar cap which is adjacent to the pressure surface of the rotor blade. At least one web connects the upper and the lower spar cap(s) and substantially projects along the spar caps. This web, together with the upper and lower spar cap(s) forms a spar or wing spar of the rotor blade. The spar takes up the majority of mechanical forces during operation of the rotor blade and introduces the angular momentum into the rotor shaft.

The spar caps are manufactured by placing a plurality of fiber mats, layers of scrim or woven fabric into a mold, impregnating the fibrous material using a synthetic resin and curing the composite material so as to provide a fiber-reinforced member. The fibrous material may be impregnated for example by help of vacuum assisted resin in fusion. Pre-impregnated fiber material (prepreg) may be used for manufacturing the spar cap. Curing of the prepreg-fibers is typically performed by hot pressing.

WO 2011/113812 A1 discloses a wind turbine blade spar. A composite material article is manufactured using a mold. However, the way of manufacturing the spar is not efficient. Another blade with a spar is known from DE 10 2008 055 537 A1.

However, when the spar cap is taken out of the mold, it typically has sharp and extending edges at the outer perimeter surrounding the shrinkage cavity. This means that edge planning has to be performed. The sharp protrusions are usually removed by grinding in order to prepare the spar cap for the subsequent process steps during manufacture of the rotor blade. However, this kind of edge planning is a very time consuming and labor intensive production step. Furthermore, in particular if carbon fibers are applied for manufacturing the spar cap, a high amount of dust is generated.

### SUMMARY

It is an object of the invention to provide an improved method of manufacturing a spar cap.

The object is solved by the subject matter of claim 1.

A spar cap for a rotor blade of a wind turbine is provided. The spar cap comprises a fiber-reinforced member and at least one edge member (a first edge member). The at least one edge member can be manufactured from the same or a similar material which is applied for manufacturing the core of the rotor blade. The edge member can be manufactured using a foam material, a wooden material or a kind of honeycomb structure. For example, balsa wood may be applied. The fiber-reinforced member is configured to be arranged along a span of the rotor blade and substantially extends between the wing root and the wing tip, when the spar cap is mounted in the rotor blade. The fiber-reinforced member has a first side which is the side facing the leading edge of the rotor blade when the spar cap is in the rotor blade. Further, the fiber-reinforced member has a second side which is the side facing the trailing edge of the rotor blade when the spar cap is in the rotor blade.

The at least one edge member can be arranged adjacent to the first side or adjacent to the second side of the fiber-reinforced member. Dependent on whether the edge member is arranged adjacent to the first side or adjacent to the second side of the fiber-reinforced member, it projects towards the leading edge of the rotor blade or towards the trailing edge of the rotor blade when the spar cap is placed in the rotor blade.

Advantageously, the spar cap comprises the first edge member and a second edge member. The first edge member can be arranged adjacent to the first side of the fiber-reinforced member and the second edge member can be arranged adjacent to the second side of the fiber reinforced member. The first edge member is configured to project towards the leading edge of the rotor blade and the second edge member is configured to project towards the trailing edge of the rotor blade.

Accordingly, there are less or no sharp edges or protrusions of fibrous material at the lateral sides or edges of the spar cap. Labor intensive edge planning or grinding is not necessary. This is advantageous in particular with respect to the production cost of a spar cap. Furthermore, the edge members can, at least partly, serve as a molding form. They may be positioned very precisely prior to molding. The spar cap then perfectly fits into a corresponding void in the rotor blade skin without the need for extensive further treatment or finishing. If the edges of the spar cap should need some adaption, the grinding or surface finish treatment, of the edge members is much easier compared to grinding of the sharp edges of the fiber-reinforced member. Any wooden dust which is generated when grinding the, for example balsa edge members is less problematic in comparison to the dust which is generated when grinding carbon fiber edges of the fiber-reinforced member. Furthermore, the edge members may be manufactured separately, remote from the manufacturing site of the rotor blades. The grinding of the edge member material can be performed more easily and faster than grinding of carbon fiber-reinforced material. Still further, a wood machining facility may be used, for example for a very fast serial production of balsa wood edge parts or members.

Advantageously, the at least one edge member covers almost the entire first side and / or the entire second side of the adjacent fiber-reinforced member. The first side and / or the second side of the fiber-reinforced member can have a recess for accommodating the at least one edge member. In other words, in a cross sectional view substantially perpendicular to the span of the rotor blade, the fiber-reinforced member comprises a recess and the edge member at least partly projects into said recess. This can improve stability and integrity of the spar cap.

The fiber-reinforced member can comprise an outer side which is configured to be arranged towards a suction surface or towards a pressure surface of the rotor blade, when the spar cap is mounted in the rotor blade. Advantageously, there can be a recess in the outer side and in the first side and / or the second side of the fiber-reinforced member so as to accommodate the at least one edge member.

The fiber-reinforced member can also comprise an inner side, which is arranged opposite to said outer side. This inner side can extend over the edge member in a direction towards the leading edge or in a direction towards the trailing edge of the rotor blade. In other words, a width of the inner side of the fiber-reinforced member in a cross sectional plane substantially perpendicular to the span of the rotor blade (or parallel to the airfoil of the rotor blade) is greater than a width of the fiber-reinforced member at the outer side. During manufacture of a spar cap, the fibrous material may be arranged so as to overlap the edge member. The fiber-reinforced member and the edge member are in contact in order to provide a reliable connection between the two members.

The fibrous material overlapping the edge member can be peel ply material. If there is fibrous material overlapping the lateral edges of the molded spar cap, the fibrous material may be removed by simply tearing off the overlapping portions. Advantageously, no grinding of the edges of the spar cap is necessary. The fiber-reinforced member comprises an outer side and the edge member comprises an outer side. The outer sides of the two members are arranged towards the suction surface or towards the pressure surface of the rotor blade, when the spar cap is mounted in the rotor blade.

The outer side of the reinforced member and the outer side of the edge member can be aligned to be flush with each other. Advantageously, the flush fitting of the two members provides a smooth surface of the spar cap which can then be arranged adjacent to the suction surface or the pressure surface of the rotor blade when the spar cap is placed in the rotor blade. Finishing of the outer side of the spar cap is reduced to minimal fine grinding if necessary at all.

Furthermore, an outer edge of the edge member may be tapered. The outer edge of the edge member can be averted from the first side or from the second side of the fiber-reinforced member. This can provide improved properties during manufacture.

The edge member can be wedge-shaped and an inner side of the edge member, which is averted from the suction surface or the pressure surface of the rotor blade, when the spar cap is arranged in the rotor blade, follows a contoured edge. This contoured edge can gradually reduce a thickness of the edge member, starting from a first thickness that can be substantially equal to a thickness of the fiber-reinforced member down to a desired second thickness. The second thickness is then lower than the first thickness. The second thickness may be adapted to a thickness of core material which is adjacent to a void for accommodating the spar cap in a shell of the rotor blade.

According to an aspect, the fiber reinforced member may be manufactured from carbon fiber reinforced material. For example, layers of scrim, advantageously UD-carbon fiber layers or mats may be applied. However, other fibrous material, for example glass-fibers may be suitable for manufacturing the fiber-reinforced member.

According to another aspect, a rotor blade for a wind turbine is provided. The rotor blade comprises at least one spar cap according to aspects of the invention. Advantageously, the rotor blade comprises at least two, further advantageously four spar caps, at least one of which is configured in accordance with aspects of the invention. A first pair of spar caps may be arranged adjacent to a pressure surface of the rotor blade, a second pair of spar caps may be arranged adjacent to a suction surface of the rotor blade.

According to still another aspect, a wind turbine is provided having a rotor comprising at least one rotor blade with at least one spar cap configured in accordance with aspects of the invention.

Same or similar advantages which have already been mentioned with respect to the spar cap apply to the rotor blade and to the wind turbine in a same or similar way and are therefore not repeated.

According to the invention, a method of manufacturing a spar cap for a rotor blade of a wind turbine is provided. At least one edge member, advantageously a first edge member and a second edge member, is / are arranged or positioned in a mold for manufacturing the spar cap. The edge member(s) is / are arranged adjacent to a surface of the mold which is for molding a front edge or a rear edge of the spar cap. The front edge and the rear edge of the spar cap are configured to be arranged towards a leading edge and a trailing edge of the rotor blade, respectively. The alignment of the first side and the second side are considered if the spar cap is mounted in the rotor blade.

Subsequently, fibrous material, for example layers of scrim of carbon fibers or glass fibers, is arranged in the mold so as to be in contact with the edge member(s). For example, UD-layers of scrim may be used.

A curing step can be performed so as to provide a spar cap comprising a fiber-reinforced member and at least one edge member. The spar cap may be manufactured using known molding technologies such as resin transfer molding (RTM), resin infusion molding (RIM) or vacuum assisted resin infusion (VARI). Furthermore, pre-impregnated fibers may be applied. Accordingly, infusion of resin may be not necessary.

Advantageously, the fibrous material is arranged in the mold so as to cover almost an entire vertical inner side of the at least one edge member. The vertical inner side of the edge member is averted from a surface of the mold which is for manufacturing a front edge or a rear edge of the spar cap. Advantageously, a bottom wall of the mold which is for manufacturing an outer side of the spar cap is a plane wall, wherein the outer side is conceived to be arranged towards a suction surface or a pressure surface of the rotor blade, when the spar cap is placed in the rotor blade. The at least one edge member and the fibrous material can be arranged side-by-side on the bottom wall so as to manufacture a spar cap comprising at least one edge member and a fiber-reinforced member which are aligned flush with each other.

The fibrous material can be arranged in the mold so as to cover an inner surface of the edge member. The inner surface is averted from the bottom of the mold and a fiber-reinforced member which projects over the edge member at a side which is opposite to the bottom wall of the mold may be provided. The fiber-reinforced member projects over the edge member in a direction towards the leading edge and / or in direction towards the trailing edge of the rotor blade. The projection(s) form(s) a recess for accommodating the at least one edge member.

Advantageously, the established process flow during manufacture of the spar cap needs to be changed very slightly. A single additional process step, namely the placement or insertion of the edge member(s) is added. Subsequent process steps do not need to be changed. However, edge planning is no longer necessary and the omission of this labor intensive process step accelerates the manufacture of the spar cap and reduces the production cost.

Further advantages of the method according to aspects of the invention are similar to the advantages which have been already mentioned with respect to the spar cap and therefore, they will not be repeated.

### BRIEF DESCRIPTION OF DRAWINGS

Further aspects and characteristics of the invention ensue from the following description of the preferred embodiments of the invention with reference to the accompanying drawings, wherein
FIG. 1 is a wind turbine according to an embodiment of the invention,
FIG. 2 is a simplified perspective view of a rotor blade according to an embodiment of the invention,
FIG. 3 is a simplified cross section of a spar cap according to an embodiment of the invention,
FIG. 4 is a simplified cross section illustrating the insertion of a spar cap according to an embodiment of the invention into a rotor blade and
FIG. 5 is a simplified perspective view of a spar cap according to another embodiment of the invention.

### DETAILED DESCRIPTION OF EXAMPLE EMBODIMENTS

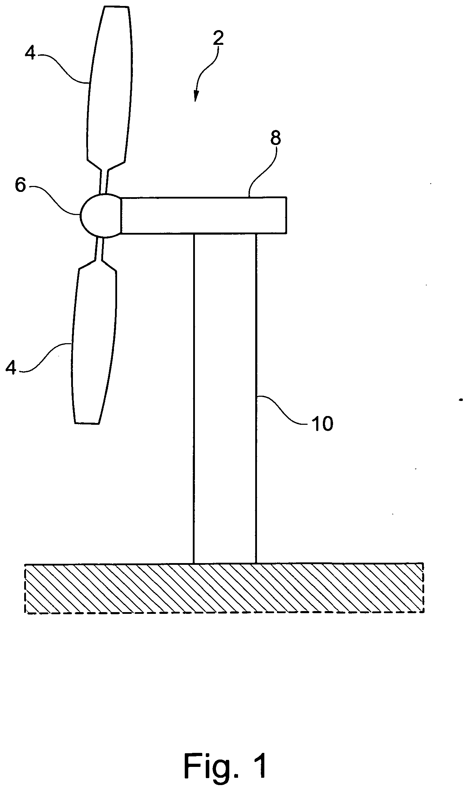

FIG. 1 is a simplified view of a wind turbine 2. The wind turbine 2 comprises a rotor having a plurality of rotor blades 4 which are mounted to a rotor hub 6. A nacelle 8 carries a generator and a drive train which is coupled to a generator inside the rotor hub 6. The nacelle 8 is mounted on a tower 10 which is founded in the sea, if the wind turbine 2 is an offshore plant or on the ground if the wind turbine 2 is land based.

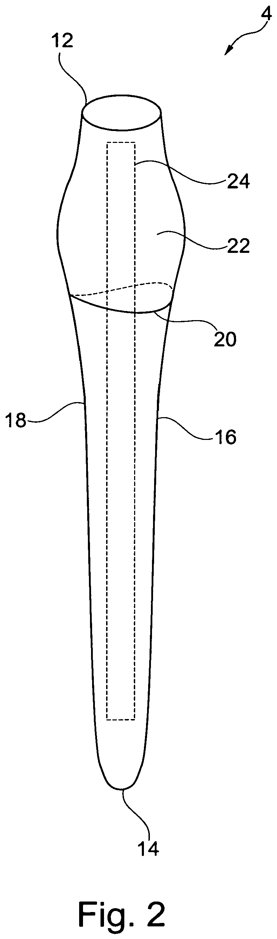

In FIG. 2, there is a simplified perspective view of a rotor blade 4. The wind turbine 2 in FIG. 1 may be supplied with rotor blades. The rotor blade 4 comprises a wing root 12 and a wing tip 14. The leading edge 16 of the rotor blade 4 is the front most point of the rotor blade 4 which contacts the air during operation of the wind turbine 2. The trailing edge 18 is the edge opposite to the leading edge 16. The distance between the wing root 12 and the wing tip 14 is the span of the rotor blade 4. The airfoil of the rotor blade 4 is illustrated in a simplified cross section 20 substantially perpendicular to the span of the rotor blade 4. It defines the shape of the suction surface 22 and the pressure surface which is opposite to the suction surface (not visible in this view). There is a spar cap 24 which substantially extends along the span of the rotor blade 4 between the wing root 12 and the wing tip 14. The spar cap 24 is mounted directly adjacent to but underneath the suction surface 22 and is depicted in dashed line. Although only one spar cap 24 is shown, there can be more than one spar cap 24 within one rotor blade.

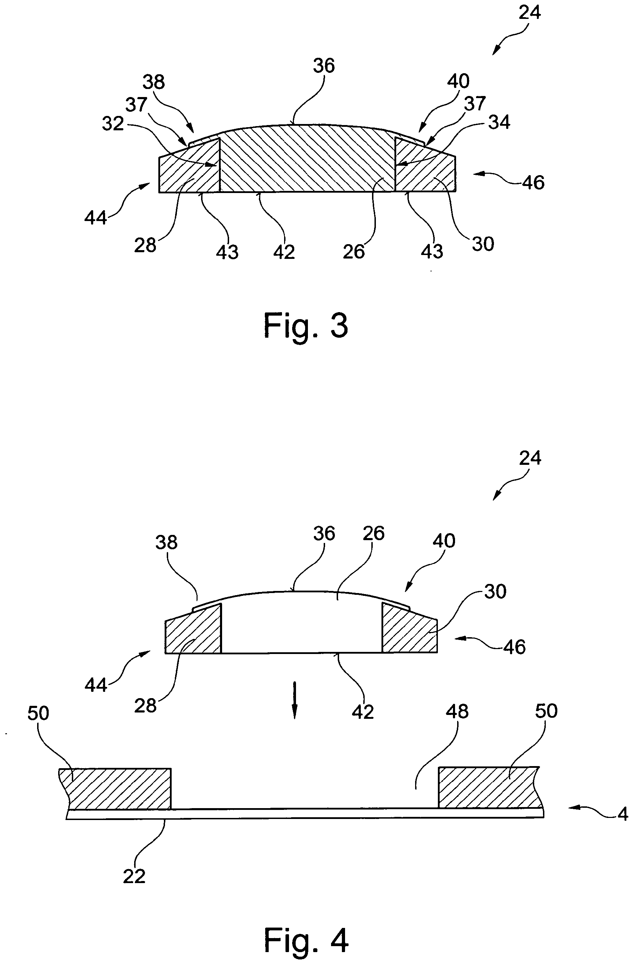

In FIG. 3, there is a simplified cross-section of a spar cap 24. The spar cap 24 comprises a fiber-reinforced member 26, a first edge member 28 and a second edge member 30. The fiber-reinforced member 26 comprises a first side 32 and a second side 34. The first side 32 is arranged towards a leading edge 16 of the rotor blade 4, if the spar cap 24 is mounted in the rotor blade 4. Similar, the second side 34 is arranged towards a trailing edge 18 of the rotor blade 4, if the spar cap 24 is mounted in the rotor blade 4. The first edge member 28 is arranged to be directly adjacent to the first side 32 of the fiber-reinforced member 26. Similar, the second edge member 30 is arranged to be directly adjacent to the second side 34 of the fiber-reinforced member 26. Advantageously, the edge members 28, 30 cover almost the entire first side 32 and the entire second side 34 of the reinforced member 26, respectively. The edge members 28, 30 advantageously extend along an entire length of the fiber-reinforced member 26, which is arranged in a direction of the span of the rotor blade 4.

The fiber-reinforced member 26 is advantageously manufactured from a carbon fiber-reinforced material. However, other materials, for example, a glass fiber-reinforced material is applicable. The fibrous material may be embedded in a synthetic resin. Advantageously, the first edge member 28 and the second edge member 30 are manufactured from a same material which is applied for manufacturing a core of the rotor blade 4. This may be foam or a wooden material, for example, balsa wood may be applied. However, honeycomb structures or any other lightweight structure may be applied for manufacturing the first edge member 28 and the second edge member 30. Advantageously, the mentioned materials apply to all embodiments of the invention.

In the embodiment of FIG. 3, the fiber-reinforced member 26 overlaps the edge members 28, 30, or in other words, the edge members 28, 30 extend into the fiber-reinforced member 26. An inner side 36 of the fiber-reinforced member 26 projects over an inner surface 37 of the first edge member 28 and over an inner surface 37 of the second edge member 30. In other words, the fiber-reinforced member 26 comprises a first projection 38 which extends over the inner surface 37 of the first edge member 28 in a direction towards the leading edge 16 of the rotor blade 4. Opposite to the first projection 38, there is a second projection 40 of the fiber-reinforced member 26. The second projection 40 covers at least a part of an inner surface 37 of the second edge member 30. The second projection 40 extends in a direction towards the trailing edge 18 of the rotor blade 4.

The inner side 36 of the fiber-reinforced member 26 is averted from an outer surface 42 which is arranged adjacent to a pressure surface or adjacent to a suction surface 22 of the rotor blade 4, if the spar cap 24 is mounted in the rotor blade 4. The outer surface 42 of the fiber-reinforced member 26 and an outer surface 43 of the first edge member 28 and an outer surface 43 of the second edge member 30 are advantageously aligned to be flush with each other. This is advantageous because the outer surfaces 42, 43 are arranged directly adjacent to a suction surface 22 and a pressure surface of the rotor blade 4, respectively.

The edge members 28, 30 may be tapered, which means that their thickness gradually decreases. The edge members 28, 30 have a first thickness at the first side 32 and the second side 34 of the fiber-reinforced member 26. The thickness is reduced to a second thickness at the front edge 44 and at the rear edge 46 of the spar cap 24, respectively. The second thickness of the edge members 28, 30 may be adapted to be approximately equal to a thickness of a core material 50 which is adjacent to a void 48 for accommodating the spar cap 24. The second thickness is lower than the first thickness.

Assembly of the spar cap 24 in a shell of a rotor blade 4 is illustrated in the simplified cross section of FIG. 4. The spar cap 24 is arranged in a suitable void 48 which is adjacent to a suction surface 22 or a pressure surface of the rotor blade 4. By way of an example, the spar cap 24 is mounted at the suction surface 22 of the rotor blade 4. The spar cap 24 may be taken directly from the mold. No finishing steps need to be performed. The spar cap 24 may be manufactured, i. e. molded to fit into the void 48 of the shell of the rotor blade 4.

A front edge 44 of the spar cap 24 is provided by a plane side surface of the first edge member 28. The fiber-reinforced member 26 overlaps the first edge member 28 at the inner surface 37. However, during manufacture of the spar cap 24, the fibrous material for manufacture of the fiber-reinforced member 26, for example layers of scrim or fiber mats, are arranged to overlap the first edge member 28 but do not reach the front edge 44 of the first edge member 28. Similar, the fibrous material overlaps the second edge member 30 by the second projection 40. However, the fibrous material does not reach the rear edge 46.

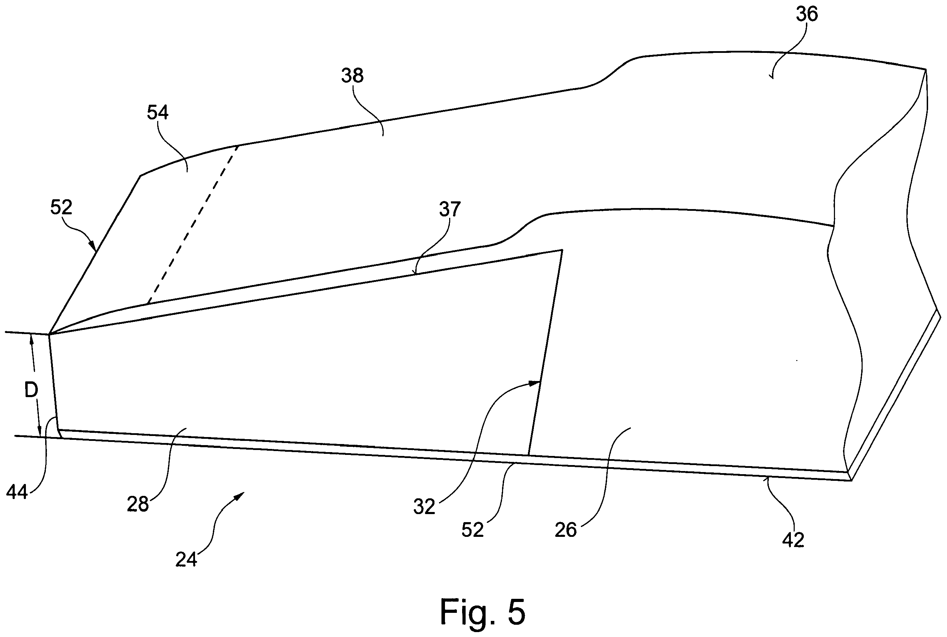

FIG. 5 is a simplified perspective view showing a section of another spar cap 24. There is a fiber-reinforced member 26 and directly adjacent to a first side 32 of the fiber-reinforced member 26 there is a first edge member 28. An outer surface 42 of the fiber-reinforced member 26 and the first edge member 28 is coated by an additional layer 52. This additional layer 52 may be applied to the outer surface 42 so as to provide a plan lower surface which may be arranged directly adjacent to a suction surface 22 or a pressure surface of the rotor blade 4.

In FIG. 5, a section of the spar cap 24 comprising the first edge member 28 is depicted. An opposite edge of the spar cap 24 comprising the second edge member 30 (not shown in FIG. 5) may be configured similar.

An inner side 36 of the fiber-reinforced member 26 projects over the first edge member 28. There is a first projection 38 of fibrous material of the fiber-reinforced member 26 which projects over nearly the entire inner surface 37 of the first edge member 28. However, this particular fibrous material, for example the topmost layers of scrim may be peel ply material. Accordingly, there is a tear-off edge 52 adjacent to the front edge 44 of the spar cap 24. Overlapping material may be removed by tearing off the overlapping portions. Further, the first projection 38 of the fiber-reinforced member 26 comprises a chamfered edge 54 so as to adjust a thickness D of the spar cap 24 to a thickness of adjacent core material 50 and / or to enhance adhesion of subsequent layers which are arranged on top of the spar cap 24 during assembly of the rotor blade 4.

## Claims

1. A method of manufacturing a spar cap (24) for a rotor blade (4) of a wind turbine, the method comprising the steps of:
a) arranging at least one edge member (28, 30) in a mold for manufacturing the spar cap (24), wherein the edge member is arranged adjacent to a surface of the mold which is for manufacturing a front edge (44) or a rear edge (46) of the spar cap (24), wherein the front edge (44) of the spar cap is configured to be arranged towards a leading edge (16) of the rotor blade and the rear edge (46) of the spar cap is configured to be arranged towards a trailing edge (18) of the rotor blade (4), if the spar cap (24) is mounted in the rotor blade (4), wherein the method is **characterized by** the steps of:
b) arranging fibrous material in the mold subsequently to the arrangement of the at least one edge member (28, 30), wherein the fibrous material is arranged to be in intimate contact with the at least one edge member (28, 30),
c) curing the fibrous material so as to provide a spar cap (24) comprising a fiber-reinforced member (26) and the at least one edge member (28, 30).

2. The method according to claim 1, wherein a first edge member (28) is arranged adjacent to a surface of the mold which is for manufacturing a front edge (44) of the spar cap (24) and a second edge member (30) is arranged adjacent to a surface of the mold which is for manufacturing a rear edge (46) of the spar cap (24) and the fibrous material is arranged in the mold so as to be in intimate contact with the first edge member (28) and with the second edge member (30).

3. The method according to claim 1 or 2, wherein the fibrous material is arranged in the mold so as to cover almost an entire vertical inner side of the at least one edge member (28, 30), wherein the vertical inner side of the edge member is averted from the surface of the mold which is for manufacturing a front edge (44) or a rear edge (46) of the spar cap (24).

4. The method according to anyone of claims 1 to 3, wherein a bottom wall of the mold is for manufacturing an outer side of the spar cap (24), which is configured to be arranged adjacent to a suction surface (22) or adjacent to a pressure surface of the rotor blade, if the spar cap (24) is mounted in the rotor blade (4), and the at least one edge member (28, 30) and the fibrous material are arranged side-by-side on the bottom wall so as to manufacture a spar cap (24) comprising at least one edge member (28, 30) and a fiber-reinforced member (26) which are aligned to be flush with each other at the outer side, , wherein the inner surface of the at least one edge member (28, 30) is averted from the bottom of the mold, so as to provide a fiber-reinforced member which projects over the at least one edge member (28, 30), wherein the fibrous material is arranged to project over the at least one edge member (28, 30) in a direction towards the leading edge (16) and / or in a direction towards the trailing edge (18) of the rotor blade (4).

5. The method according to anyone of claims 1 to 4, wherein any fibrous material overlapping the lateral edges of the molded spar cap (24) is removed by tearing off the overlapping portions.

## Patentansprüche

1. Verfahren zur Herstellung eines Holmgurts (24) für ein Rotorblatt (4) einer Windkraftanlage, wobei das Verfahren die folgenden Schritte umfasst:
a) Anordnen wenigstens eines Randelements (28, 30) in einer Form zur Herstellung des Holmgurts (24), wobei das Randelement angrenzend an eine Fläche der Form angeordnet wird, die zur Herstellung einer vorderen Kante (44) oder einer hinteren Kante (46) des Holmgurts (24) dient, wobei die vordere Kante (44) des Holmgurts zur Anordnung zu einer Vorderkante (16) des Rotorblatts hin und die hintere Kante (46) des Holmgurts zur Anordnung zu einer Hinterkante (18) des Rotorblatts (4) hin eingerichtet ist, wenn der Holmgurt (24) im Rotorblatt (4) angebracht ist, wobei das Verfahren durch die folgenden Schritte **gekennzeichnet** ist:
b) Anordnen von Fasermaterial in der Form anschließend an die Anordnung des wenigstens einen Randelements (28, 30), wobei das Fasermaterial so angeordnet wird, dass es in innigem Kontakt mit dem wenigstens einen Randelement (28, 30) ist,
c) Aushärten des Fasermaterials, um einen Holmgurt (24) bereitzustellen, der ein faserverstärktes Element (26) und das wenigstens eine Randelement (28, 30) umfasst.

2. Verfahren nach Anspruch 1, bei dem ein erstes Randelement (28) angrenzend an eine Fläche der Form angeordnet wird, die zur Herstellung einer vorderen Kante (44) des Holmgurts (24) dient, und ein zweites Randelement (30) angrenzend an eine Fläche der Form angeordnet wird, die zur Herstellung einer hinteren Kante (46) des Holmgurts (24) dient, und das Fasermaterial so in der Form angeordnet wird, dass es in innigem Kontakt mit dem ersten Randelement (28) und mit dem zweiten Randelement (30) ist.

3. Verfahren nach Anspruch 1 oder 2, bei dem das Fasermaterial so in der Form angeordnet wird, dass es fast eine gesamte vertikale Innenseite des wenigstens einen Randelements (28, 30) bedeckt, wobei die vertikale Innenseite des Randelements von der Fläche der Form abgewandt ist, die zur Herstellung einer vorderen Kante (44) oder einer hinteren Kante (46) des Holmgurts (24) dient.

4. Verfahren nach einem der Ansprüche 1 bis 3, bei dem eine Bodenwand der Form zur Herstellung einer Außenseite des Holmgurts (24) dient, die zur Anordnung angrenzend an eine Saugseite (22) oder angrenzend an eine Druckseite des Rotorblatts eingerichtet ist, wenn der Holmgurt (24) im Rotorblatt (4) angebracht ist, und das wenigstens eine Randelement (28, 30) und das Fasermaterial nebeneinander an der Bodenwand so angeordnet werden, dass ein Holmgurt (24) hergestellt wird, der wenigstens ein Randelement (28, 30) und ein faserverstärktes Element (26) umfasst, die so ausgerichtet sind, dass sie an der Außenseite bündig miteinander abschließen, wobei die Innenfläche des wenigstens einen Randelements (28, 30) vom Boden der Form so abgewandt ist, dass ein faserverstärktes Element bereitgestellt wird, das über das wenigstens eine Randelement (28, 30) übersteht, wobei das Fasermaterial so angeordnet ist, dass es in einer Richtung zur Vorderkante (16) und / oder in einer Richtung zur Hinterkante (18) des Rotorblatts (4) hin über das wenigstens eine Randelement (28, 30) übersteht.

5. Verfahren nach einem der Ansprüche 1 bis 4, bei dem jegliches Fasermaterial, das die Seitenränder des geformten Holmgurts (24) überlappt, durch Abreißen der überlappenden Abschnitte entfernt wird.

## Revendications

1. Procédé de fabrication d'une semelle de longeron (24) pour une pale de rotor (4) d'un éolienne, le procédé comprenant les étapes suivantes :
a) agencement d'au moins un élément de bord (28, 30) dans un moule pour la fabrication de la semelle de longeron (24), l'élément de bord étant agencé adjacent à une surface du moule destinée à la fabrication d'un bord avant (44) ou d'un bord arrière (46) de la semelle de longeron (24), le bord avant (44) de la semelle de longeron étant réalisé de manière à être agencé vers un bord d'attaque (16) de la pale de rotor, et le bord arrière (46) de la semelle de longeron étant réalisé de manière à être agencé vers un bord de fuite (18) de la pale de rotor (4), lorsque la semelle de longeron (24) est montée dans la pale de rotor (4), le procédé étant **caractérisé par** les étapes suivantes :
b) agencement de matière fibreuse dans le moule après l'agencement dudit au moins un élément de bord (28, 30), la matière fibreuse étant agencée de manière à être en contact étroit avec ledit au moins un élément de bord (28, 30),
c) cuire la matière fibreuse de manière à fournir une semelle de longeron (24) qui comprend un élément (26) renforcé par des fibres et ledit au moins un élément de bord (28, 30).

2. Procédé selon la revendication 1, dans lequel un premier élément de bord (28) est agencé adjacent à une surface du moule destinée à la fabrication d'un bord avant (44) de la semelle de longeron (24), et un deuxième élément de bord (30) est agencé adjacent à une surface du moule destinée à la fabrication d'un bord arrière (46) de la semelle de longeron (24), et dans lequel la matière fibreuse est agencée dans le moule de manière à être en contact étroit avec le premier élément de bord (28) et avec le deuxième élément de bord (30).

3. Procédé selon la revendication 1 ou 2, dans lequel la matière fibreuse est agencée dans le moule de manière à couvrir presque l'ensemble d'une face intérieure verticale dudit au moins un élément de bord (28, 30), la face intérieure verticale de l'élément de bord étant détournée de la surface du moule destinée à la fabrication d'un bord avant (44) ou d'un bord arrière (46) de la semelle de longeron (24).

4. Procédé selon l'une des revendications 1 à 3, dans lequel une paroi de fond du moule est destinée à la fabrication d'une face extérieure de la semelle de longeron (24), laquelle est réalisée de manière à être agencée adjacente à une surface d'aspiration (22) ou adjacente à une surface de pression de la pale de rotor, lorsque la semelle de longeron (24) est montée dans la pale de rotor (4), et ledit au moins un élément de bord (28, 30) et la matière fibreuse sont agencés côte à côte sur la paroi de fond de telle sorte qu'une semelle de longeron (24) est fabriquée qui comprend au moins un élément de bord (28, 30) et un élément (26) renforcé par des fibres qui sont alignés de manière à être en affleurement sur la face extérieure, la face intérieure dudit au moins un élément de bord (28, 30) étant détournée du fond du moule de sorte qu'un élément renforcé par des fibres qui fait saillie dudit au moins un élément de bord (28, 30) est fourni, la matière fibreuse étant agencée de manière à faire saillie dudit au moins un élément de bord (28, 30) dans un sens vers le bord d'attaque (16) et/ou dans un sens vers le bord de fuite (18) de la pale de rotor (24).

5. Procédé selon l'une des revendications 1 à 4, dans lequel toute matière fibreuse recouvrant les bords latéraux de la semelle de longeron moulée (24) est enlevée en arrachant les parties en recouvrement.
